# EUROPÄISCHE PATENTSCHRIFT

(11) **EP 1 029 730 B1**
(45) Veröffentlichungstag und Bekanntmachung des Hinweises auf die Patenterteilung: **09.04.2003**
(21) Anmeldenummer: 00100330.0
(22) Anmeldetag: 07.01.2000
(51) Int. Cl.: B60K 35/00, G02B 26/08

(54) **Anzeigevorrichtung für Fahrzeuge mit in Blickrichtung des Fahrers angeordneter Anzeigefläche**
Display device for vehicles with display surface arranged in the visual axis of the driver
Dispositif d'affichage pour véhicules avec panneau d'affichage disposé dans la direction du regard du conducteur

(30) Priorität: 16.02.1999 DE 19906435
(43) Veröffentlichungstag der Anmeldung: 23.08.2000
(73) Patentinhaber: Bayerische Motoren Werke Aktiengesellschaft, 80809 München (DE)
(72) Erfinder: Frickenstein, Elmar, 82266 Inning (DE); Schrievers, Gabriele, 80937 München (DE)

(56) Entgegenhaltungen:
- US-A- 5 805 119

## Beschreibung

Die Erfindung bezieht sich auf eine Anzeigevorrichtung für Fahrzeuge mit in Blickrichtung des Fahrers angeordnet einer Anzeigefläche.

Derartige Vorrichtungen sind in Fahrzeugen üblich. Sie dienen dazu, dem Fahrer Informationen über den Zustand des Fahrzeugs oder aber auch Hilfen für das sichere Erreichen eines Ziels zu präsentieren. Es ist auch bekannt, auf der Anzeigefläche ein Fernsehbild darzustellen. Bedingt durch die Zulassungsvorschriften darf dieses Fernsehbild jedoch nicht für den Fahrer sichtbar sein, wenn die Fahrzeuggeschwindigkeit über einem niedrigen Wert von beispielsweise 5 km/h liegt. Es ist hierfür üblich, in diesem Fall das Fernsehbild auszuschalten. Dadurch aber steht die Anzeigefläche während der Benutzung des Fahrzeugs die meiste Zeit nicht zur Verfügung. Dies ist um so bedauerlicher, als der apparative Aufwand und die damit verbundenen Kosten erheblich sind.

Eine Anzeigevorrichtung gemäß dem Oberbegrift des Anspruchs 1 ist aus der US 5805119 A bekannt. Die Windschutzscheibe wird hier als Anzeigefläche verwendet. Nach Bedart wird darauf ein Bild projektiert.

Der Erfindung liegt die Aufgabe zugrunde, eine Anzeigevorrichtung zu schaffen, die in einem wesentlich größeren Umfang nutzbar ist.

Die Erfindung löst diese Aufgabe mit den Merkmalen des Patentanspruchs 1.

Mit Hilfe der mikromechanischen Spiegel, deren Verwendung zur Bilddarstellung in einem Kraftfahrzeug auch der US 5,805,119 bekannt ist, ist es möglich, das auf der Anzeigefläche dargestellte Bild in zwei Teile aufzuspalten. Damit ist es möglich, dem Beifahrer oder einem anderen Fahrgast ein (Teil-)Bild zur Verfügung zu stellen, das völlig verschieden von dem ist bzw. sein kann, das der Fahrer betrachtet. Selbstverständlich ist es auch möglich, dem Fahrer und dem Fahrgast dasselbe Bild zu zeigen, sofern dies wie im Falle des Fernsehbildes bei stehendem Fahrzeug zulässig ist. Für das Beispiel Fernsehbild kann dann, wenn die Betrachtung für den Fahrer nicht mehr zulässig ist, diesem dann ein Bild gezeigt werden, auf dem fahrzeugrelevante Daten wie Geschwindigkeit, Motordrehzahl, Kraftstoffvorrat und dergleichen zur Anzeige gebracht werden. Es kann also vorteilhaft sein, das dem Fahrer gezeigte Bild fahrzeuggeschwindigkeitsabhängig und mit Hilfe der mikromechanischen Spiegel zu ändern.

Die Patentansprüche 2 und 3 zeigen Varianten für die Anordnung des Feldes aus mikromechanischen Spiegeln, der Patentanspruch 4 eine Möglichkeit, unterschiedliche Fahrzeugbenutzer in den Genuß von ggf. unterschiedlichen Bildern kommen zu lassen.

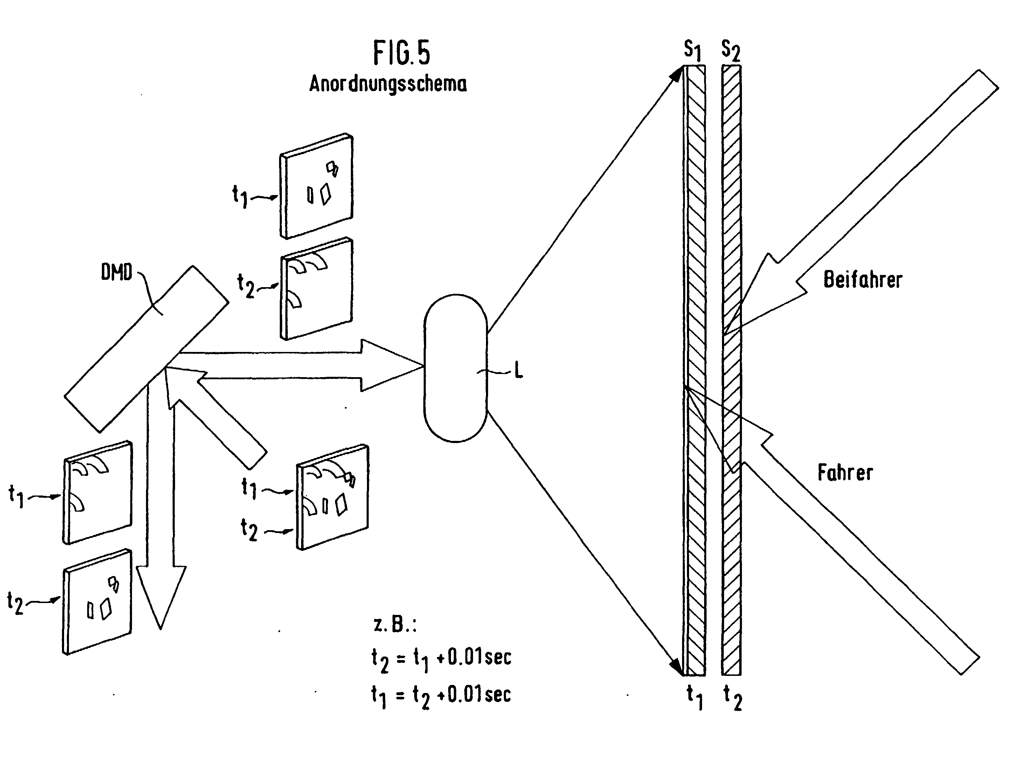

Wie insbesondere anhand des Ausführungsbeispiels von Fig. 5 gezeigt, ist es auch möglich, auch mehrere Anzeigeflächen vorzusehen, deren Bild jeweils als ganzes oder auch in Teilbilder aufgespalten unterschiedlichen Fahrzeugbenutzem zur Verfügung gestellt werden können. Damit ergibt sich eine optimale Möglichkeit, Informationen, Bilder und dergleichen fahrgastindividuell darzustellen.

Anhand der in der Zeichnung dargestellten Ausführungsbeispiele ist die Erfindung weiter erläutert. Es zeigt
- Fig. 1: eine Einrichtung zur Bilddarstellung mit Hilfe mikromechanischer Spiegel,
- Fig. 2 bis 5: konstruktive Anordnungen optischer Elemente zum Erzeugen von mindestens zwei von unterschiedlichen Fahrgast-Positionen aus einsehbaren Bildern.

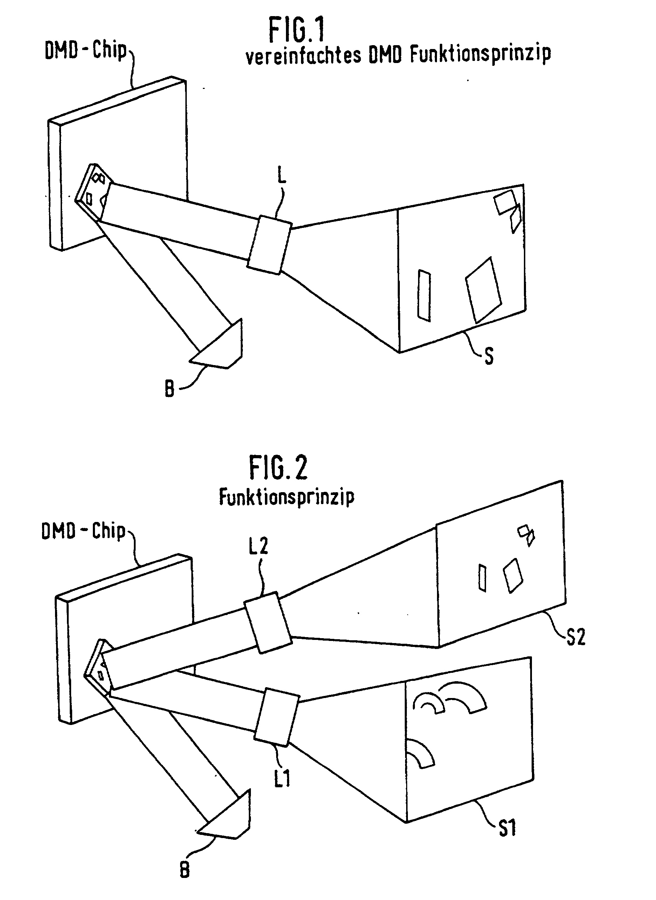

Ein in Fig. 1 gezeigter DMD (deformable/digital micromirror device)-Chip enthält ein Feld digital verstellbarer Mikrospiegel (nicht im einzelnen dargestellt), deren Größe entsprechend der jeweiligen Pixelauflösung gewählt ist. Durch eine enge Anordnung der Spiegel wird im sichtbaren (projizierten) Bild eine Rasterstruktur vermieden. Die Beleuchtung (und Erzeugung/Projektion) eines Bildes erfolgt mittels einer Beleuchtungs-/Projektionsoptik B, die das anzuzeigende Bild auf den DMD-Chip wirft. Dort wird es reflektiert und durch eine Linse L auf einen Bildschirm S geworfen. Ein hoher Kontrast des Bildes auf dem Bildschirm S wird dadurch erreicht, daß die Mikrospiegel schwarzfarbiger Pixel so verstellt werden, daß kein Restlicht mehr in das Auge des Betrachters fällt.

Mit Hilfe des DMD-Chips lassen sich nun zwei völlig voneinander unabhängige Bilder erzeugen, die in das Auge des Fahrers und eines weiteren Fahrgastes fallen. Dazu wird die Verstellbarkeit der einzelnen Spiegel genutzt, um Informationen gezielt auszublenden, so daß sie für den Fahrer während der Fahrt nicht einsehbar sind, vom Beifahrer jedoch uneingeschränkt wahrgenommen werden können. Auf diese Weise können einzelne Bereiche des Bildschirms, aber auch die komplette Bildschirmfläche für den Fahrer (oder den Beifahrer) maskiert werden.

Die Erzeugung der hinsichtlich des Wiedergabeortes undloder Inhalts unterschiedlicher Bilder kann in verschiedener Weise erfolgen. Eine grundsätzliche Möglichkeit ist in Fig. 2 gezeigt. Auf einem DMD-Chip sind unterschiedliche Bereiche B1 und B2 mit insgesamt zwei unterschiedlichen Reflexwinkeln vorgesehen, denen jeweils ein Linsensystem L1 und L2 zugeordnet ist. Der Verstellwinkel der Mikrospiegel des DMD ist auf die jeweilige Blickrichtungen der Nutzer abgestimmt. Auf zwei räumlich voneinander verschieden angeordneten Bildschirmen S1 und S2 ergeben sich zwei Bilder, die im dargestellten Beispiel komplementär zueinander sind.

Sind die Bildschirme S1 und S2 jeweils nur von Fahrer und Beifahrer einsehbar, so können die DMD-Spiegel insgesamt vier Einstellmöglichkeiten besitzen, nämlich
- in Blickrichtung des Fahrers,
- in Blickrichtung des Beifahrers
- in Blickrichtung von Fahrer und Beifahrer (damit Informationen von beide Nutzem parallel wahrgenommen werden können) sowie
- außerhalb der Blickrichtung sowohl des Fahrers als auch des Beifahrers.

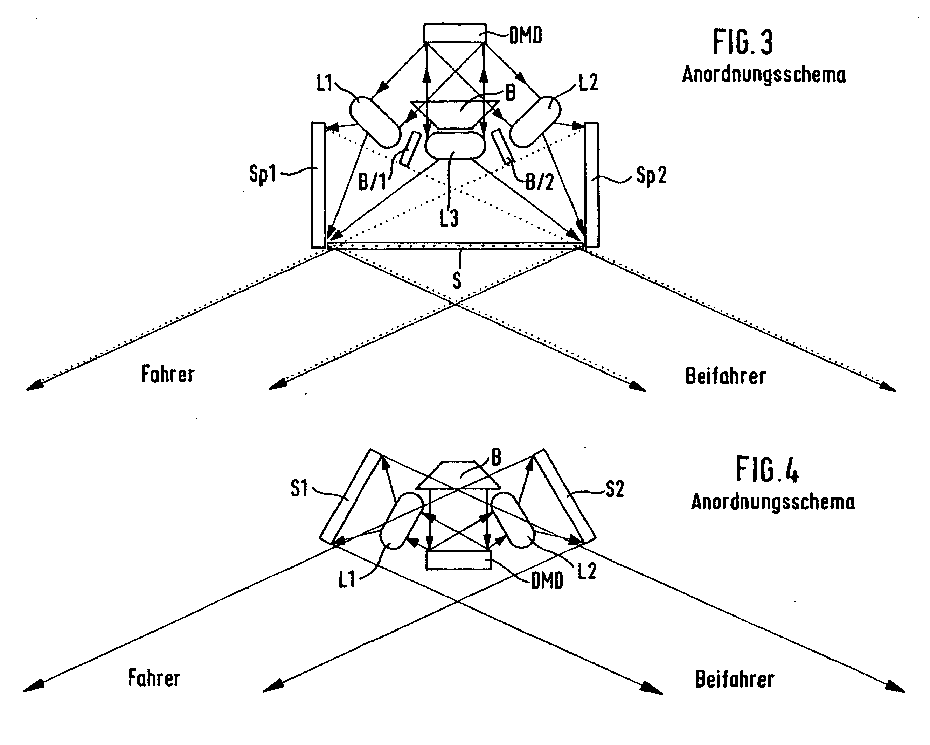

Ein hierfür geeignetes Anordnungsschema auf Basis eines DMD mit vier diskreten Spiegelpositionen = Reflexwinkeln (Multiple Screen-Technik) zeigt Fig. 3. Das Bild B wird durch den DMD-Chip als ganzes reflektiert und über das Linsensystem L1 sowie einem Spiegel Sp1 in das Auge des Beifahrers oder über das Linsensystem L2 sowie einem Spiegel Sp2 in das Auge des Fahrers geworfen, oder aber wie in Fig. 2 gezeigt in zwei Teilbilder aufgespalten und jeweils als ein Teilbild dem Fahrer und dem Beifahrer zugeführt, oder aber als komplettes Bild vom DMD-Chip mit einheitlichem Reflexionswinkel über ein weiteres Projektionssystem L3 für Fahrer und Beifahrer wiedergegeben. Durch Einstellung der DMD-Mikrospiegel mit einem weiteren Reflexionswinkel kann das komplette Bild B aus dem Strahlengang der Linsensysteme L1,L2,L3 ausgeblendet werden und gelangt weder zum Fahrer noch zum Beifahrer. Zwei Blenden BI1 und BI2 sorgen für die Trennung der Strahlengänge zu den Linsensystemen L1,L2 und L3.

Eine Alternative zu Fig. 3 zeigt Fig. 4. Dabei werden unter Verwendung von optischen Elementen, die, soweit vorhanden, mit den gleichen Bezugszeichen wie in Fig. 3 versehen sind, auf den Bildschirmen S1 und S2 zwei Bilder erzeugt, die jeweils nur von Fahrer und Beifahrer einsehbar sind. Jedem der beiden Bilder ist wieder jeweils ein Teil der DMD-Microspiegel zugeordnet. Die Erzeugung zweier identischer Bilder für Fahrer und Beifahrer erfordert zwei identische Teilbilder auf der Beleuchtungs-/Projektionsoptik B.

Schließlich zeigt Fig. 5 eine weitere Möglichkeit, zwei Bilder jeweils nur Fahrer oder Beifahrer zu zeigen.

Die Bilder für die beiden Blickrichtungen werden, wie bei Fig. 2 bis 4, mit der Beleuchtungs-/Projektionsoptik B dargestellt und mit dem DMD-Chip mit zwei diskreten Stellungen zeitlich hintereinander reflektiert. Jeweils die einem der beiden Bilder zugeordneten Microspiegel reflektieren ihr Bild. Ein einziges Linsensystem L entwirft die beiden Bilder auf dem Bildschirm S. Die beiden Bilder werden also zeitlich hintereinander erzeugt - bei einer Taktfrequenz von 100 Hz für die Ansteuerung der Mikrospiegel können so zwei unterschiedliche Bilder mit einer Taktfrequenz von 50 Hz realisiert werden (ausreichend z. B. für Videoqualität). Die Bildschirme S1 und S2 sind räumlich hintereinander angeordnet und werden entsprechend der o. g. Taktfrequenz ebenfalls umgeschaltet (elektronisches Prisma, elektrochrome Folien, Lamellenstruktur, ...). Dadurch kann jeder Bildschirm nur diskret von einer Blickrichtung eingesehen werden.

## Patentansprüche

1. Anzeigevorrichtung für Fahrzeuge mit in Blickrichtung des Fahrers angeordnet einer Anzeigefläche (S), wobei
im Strahlengang zwischen der Anzeigefläche (S) und dem Fahrer ein Feld (DMD) aus mikromechanischen Spiegeln angeordnet ist, die insgesamt mindestens zwei Orientierungsrichtungen aufweisen, von denen die eine Richtung einen zum Fahrer hin verlaufenden Strahlengang beschreibt, **dadurch gekennzeichnet, daß** die andere Richtung einen vom Fahrer weg und zu einem Fahrgast hin gerichteten Strahlengang beschreibt.

2. Anzeigevorrichtung nach Anspruch 1,
**dadurch gekennzeichnet, daß** das Feld in der Anzeigefläche angeordnet ist.

3. Anzeigevorrichtung nach Anspruch 1,
**dadurch gekennzeichnet, daß** das Feld im Strahlengang zwischen Anzeigefläche und dem Fahrer angeordnet ist.

4. Anzeigevorrichtung nach Anspruch 1,
**dadurch gekennzeichnet, daß** die Strahlrichtungen einzeln oder gemeinsam änderbar sind.

## Claims

1. Display device for vehicles with a display surface (S) arranged in the visual axis of the driver, whereby, in the ray path between the display surface (S) and the driver, a field (DMD) of micromechanical mirrors is arranged, having in all at least two orientation directions, of which one direction defines a ray path running towards the driver, **characterised in that** the other direction defines a ray path directed away from the driver and towards a passenger.

2. Display device according to Claim 1, **characterised in that** the field is arranged in the display surface.

3. Display device according to Claim 1, **characterised in that** the field is arranged in the ray path between the display surface and the driver.

4. Display device according to Claim 1, **characterised in that** the ray directions may be altered individually or together.

## Revendications

1. Dispositif d'affichage pour des véhicules, comportant une surface d'affichage (S) placée dans la direction d'observation du conducteur, selon lequel
entre la surface d'affichage (S) et le conducteur, dans le chemin des rayons il est prévu un champ (DMD) de miroirs micromécaniques, qui présentent globalement au moins deux directions d'orientation, l'une des directions décrivant un chemin de rayon allant vers le conducteur,
**caractérisé en ce que**
l'autre direction décrit un chemin de rayon partant du conducteur et allant vers un passager.

2. Dispositif d'affichage selon la revendication 1,
**caractérisé en ce que**
le champ est placé dans la surface d'affichage.

3. Dispositif d'affichage selon la revendication 1,
**caractérisé en ce que**
le champ est placé dans le chemin des rayons entre la surface d'affichage et le conducteur.

4. Dispositif d'affichage selon la revendication 1,
**caractérisé en ce que**
les directions des rayons peuvent être modifiées isolément ou globalement.
